# EUROPEAN PATENT APPLICATION

(11) **EP 4 502 370 A1**
(43) Date of publication of application: **05.02.2025**
(21) Application number: 23189140.9
(22) Date of filing: 02.08.2023
(51) Int. Cl.: F03D 15/10, F03D 80/50

(54) **WIND TURBINE DRIVETRAIN**

(71) Applicant: Siemens Gamesa Renewable Energy A/S, 7330 Brande (DK)
(72) Inventor: Rogg, Andreas, 22605 Hamburg (DE)
(74) Representative: SGRE-Association

(57) **Abstract**

The invention describes a wind turbine drivetrain (1) comprising a planetary gearbox (12) for converting rotation of a low-speed shaft (10) to rotation of a high-speed gearbox output shaft (122); a generator (14) mounted about an annular sleeve (124) extending axially outward from a gearbox housing (12H) and enclosing the gearbox output shaft (122); a bearing assembly (16) arranged between the generator (14) and the gearbox (12), comprising a rotary bearing part (16R) and a stationary bearing part (16S); and a torsional vibration damper (13) arranged between two rotary components (122, 122A, 122B, 14R, 16R) of the drivetrain (1), which torsional vibration damper (13) comprises a number of damping elements (13E). The wind turbine drivetrain is characterized in that the torsional vibration damper (13) is dimensioned to facilitate access from within the generator (14). The invention further describes a method of performing a maintenance procedure on such a wind turbine drivetrain (1).

## Description

### Background

The drivetrain of a wind turbine can comprise a low-speed shaft turned by the aerodynamic rotor, a gearbox with a high-speed output shaft, and a generator connected to the high-speed shaft. In a known type of medium-speed powertrain, the gearbox is a multistage planetary gearbox, and the generator is coaxially mounted to the gearbox. In such a realization, the low-speed shaft, the planetary gearbox sun shaft and the generator rotor essentially share a common axis of rotation.

Instead of securing the generator housing to a bedplate or other fixed structure, the generator housing is attached in cantilever fashion to the gearbox housing. This cantilever drivetrain design has various favourable design features, for example a bearing assembly that primarily serves to support the gearbox output shaft may also be used to centre and support the generator rotor. This bearing assembly or "gearbox-generator bearing", which can for example comprise a pair of tapered roller bearings, is usually realised in the form of a cartridge that can be handled as a single unit and extracted to the rear of the generator. Furthermore, the gearbox-generator bearing can be supplied with lubricant from a gearbox lubrication system, avoiding the need to equip the generator with a dedicated lubrication system.

However, in a drivetrain with this type of configuration, the development of tonal noise can be a problem. Tonal noise may arise when structure-borne vibrations, resulting from gear excitation, coincide with eigenmodes of the drivetrain or other structural parts of the wind turbine. Tonal noise may also have its origin in the small but unavoidable degree of torsional oscillation of the torque-transferring parts, e.g. a gearbox sun shaft, which can lead to vibration through the gearbox/generator coupling. Structure-borne vibrations originating in the generator or gearbox can be transferred either to the main shaft housing, and from there to the bedplate and tower, or to the main shaft, the hub and rotor blades. This structure-borne vibration is converted to audible noise when components of the wind turbine (e.g. rotor blades, tower etc.) act as a type of amplifier or loudspeaker. While the occurrence of such tonal noise is not relevant for offshore installations, it can be a problem for onshore installations near residential areas, since it may be required that wind turbine noise does not exceed an immission threshold, specified in the applicable noise regulations.

Therefore, in order to use a cantilever drivetrain configuration in an onshore installation, it may be necessary to take corrective measures to counteract tonal noise so that the wind turbine can comply with the applicable noise regulations. In one approach, the transfer of structure-borne noise from the drivetrain to amplifying components of the wind turbine can be mitigated to some extent by incorporating suitable dampers at strategic positions, for example between a drivetrain housing and a bedplate. However, the structural noise is not completely eliminated, so that some acoustic wind turbine noise may still be perceived.

In an alternative approach, the development of structure-borne noise from the gearbox may be suppressed by mounting a large torsional damper between the sun gear of the final gearbox stage and the generator input shaft. Depending on its design, such a torsional damper may also require lubrication, and must therefore be connected to an oil supply and drain arrangement. The purpose of this type of damper is to ensure that the coupling between gearbox and generator is free of vibration. While effective, a problem with this approach is that the large damper is not easily accessible for maintenance but - since its service life may be considerably shorter than the service life of the wind turbine - a maintenance procedure will need to be performed at some stage. In order to access the torsional damper, it is first necessary to completely remove the generator and also the gearbox/generator bearing. These procedures are time-consuming and difficult, and can result in significant downtime. Therefore, this prior art approach to noise mitigation is associated with unfavourably high costs.

It is therefore an object of the invention to provide a more economical way of reducing structure-borne noise in this type of drivetrain.

This object is achieved by the claimed wind turbine drivetrain and by the claimed method of performing maintenance on the drivetrain.

### Description

According to the invention, the wind turbine drivetrain comprises a planetary gearbox for converting rotation of a low-speed shaft to rotation of a high-speed gearbox output shaft; a generator mounted about an annular sleeve extending axially outward in a downwind direction from a housing of the gearbox; a bearing assembly arranged between the generator and the gearbox, comprising a rotary bearing part and a stationary rotary bearing part; and a torsional vibration damper arranged between two rotary components of the drivetrain, which torsional vibration damper comprises a number of damping elements. The inventive drivetrain is characterized in that a torsional vibration damper is dimensioned and arranged to facilitate access from within the generator. In other words, it is sufficient to gain access to the interior of the generator, in order to obtain access to a torsional damper, which can then be removed from the generator if necessary. Equally, after obtaining access to a torsional damper from within the generator, an on-site maintenance procedure can be carried out on the damper.

The inventive drivetrain can comprise one or more torsional dampers, arranged at various positions between the output shaft and the generator interior. Each torsional damper can be accessed from within the generator on account of its favourable dimensions and/or on account of its favourable placement. Even when arranged about the gearbox output shaft, a torsional damper of the inventive drivetrain can be accessed from within the generator interior, for example for a replacement procedure or a repair procedure.

The cantilever drivetrain configuration described above - in which the generator is supported by the gearbox and does not rest on a bedplate - is augmented by a torsional damper, which effectively prevents vibrations from being passed between the gearbox and the generator. By incorporating a torsional damper at the coupling between gearbox and generator, acoustic noise originating from structure-borne gearbox vibrations and/or generator vibrations is advantageously reduced or even eliminated.

A further advantage of the inventive drivetrain configuration is that there is no need to remove the generator from the drivetrain, or to remove the gearbox/generator bearing, in order to access a torsional damper. Instead, according to the invention, a method of performing a maintenance procedure on the drivetrain comprises the steps of removing a rear cover of the generator; detaching - if necessary - any generator components that are downwind of that torsional damper; releasing fasteners of the torsional damper; and removing the torsional damper through the rear of the generator. A replacement torsional damper can then be installed, and the generator is reassembled in the reverse order. Such a procedure can be carried out with relative ease and within a favourably short time. The inventive method does not involve heavy equipment of the type required to lift or move the generator. This is a very significant advantage, since the generator of such a wind turbine drivetrain can have a mass in the order of 4,000 - 8,000 kg and requires specialist lifting equipment. The ability to access a torsional damper without having to remove the generator is therefore a highly relevant design feature.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the drivetrain is for use in an indirect-drive wind turbine, particularly for an onshore wind turbine installation. The gearbox/generator bearing may be referred to herein simply as the "bearing", "bearing assembly" or "bearing cartridge".

In the following, it may be assumed that the generator is mounted about an annular sleeve extending axially in the downwind direction from the gearbox housing. This annular sleeve is part of the gearbox housing and serves to provide support for the gearbox/generator bearing. The gearbox/generator bearing cartridge can be arranged in the interior of this annular sleeve. Alternatively, the gearbox/generator bearing cartridge can be arranged about the exterior of the annular sleeve.

Since the low-speed shaft and the gearbox sun shafts can be hollow, the coaxial alignment of the drivetrain components can be exploited by arranging a hollow tube in the interior spaces of the low-speed shaft, gearbox and generator, and using this hollow tube as a cable conduit for electrical cables to the hub, for example cables from a wind turbine controller to the pitch systems of the rotor blades. Such a cable conduit can extend from inside the gearbox output shaft through the generator, towards the rear of the drivetrain.

The expressions "torsional vibration damper" and "torsional damper" shall be understood to be synonyms and may be used interchangeably herein, and shall be understood to refer to a damper that does not require lubrication, i.e. a torsional damper of the inventive drivetrain does not require connection between an oil supply and drain.

A torsional damper can be realised in any suitable manner. In a preferred embodiment of the invention, a torsional vibration damper has an overall annular form with a central circular opening, with an inner annular arrangement of threaded axial bores for connection to a first rotary component of the drivetrain and an outer annular arrangement of threaded axial bores for connection to a second rotary component of the drivetrain. The bores are formed to receive axial fasteners that will be inserted into the relevant rotary drivetrain component in the upwind direction, i.e. from within the interior of the generator.

In a particularly straightforward realisation, a torsional vibration damper comprises a single annular damping element arranged between the inner and outer annular bore arrangements.

In another preferred embodiment of the invention, a torsional vibration damper comprises a number of cavities, and a damping element arranged in each cavity. The plurality of cavities is formed in a region between the inner and outer annular bore arrangements.

Regardless of the manner in which the torsional damper is constructed, its damping element(s) absorb torsional deflections of a drivetrain rotary component, i.e. a torsional damper imparts a degree of elasticity to the connection it forms between two rotary components.

The desired damping characteristics can be achieved in various ways. For example, damping characteristics can be determined by the materials from which a damping element is made, and by the shape of the damping element. In the case of a torsional damper with a single annular damping element, the damping element can be made of rubber or a similar elastomer and can be clamped or otherwise contained between the inner and outer annular bore arrangements.

In the case of a torsional damper with multiple damping elements, these can each be made from a suitable elastomer and shaped to fit tightly into a cavity. For example, a damping element can be provided in the form of a cylinder of a hard rubber or similar, and is placed in a cavity so that its circular end faces lie against opposing faces of the cavity. During operation of the drivetrain, kinetic energy arising from structure-born vibration is converted to heat through deformation of the elastic material of the damper element.

In a further preferred embodiment of the invention, a damping element is preloaded, i.e. the length of the damping element exceeds the length of the cavity, so that the damping element must be compressed before insertion into the cavity.

In a further preferred embodiment of the invention, a damping element comprises two or more parts. For example, a damping element can comprise one or more of a spring, a friction element or a piston assembly.

Regardless of the manner in which the torsional dampers are designed, the heat arising from conversion of kinetic energy can dissipate to the surroundings.

There are various possible ways in which this type of torsional damper could be placed at the coupling between gearbox and generator.

For example, a torsional damper may be placed very close to the output stage of the gearbox. This may be preferred if the final stage of the gearbox comprises helical gears which result in an axial force on the output shaft.

To facilitate such a configuration, the gearbox output shaft can be realised in two parts, with a first section terminating close to the output stage, and a second section extending into the annular sleeve and generator. A torsional damper is connected between these two sections, transferring axially-directed forces between the first section of the shaft and the rotary bearing part. During operation of the wind turbine, vibrations are not passed between the first output shaft section and the second output shaft section. For use in such a configuration, it is preferable to deploy a damper design which is unaffected by an oil lubricated environment.

An advantage of the embodiment described above is that the torsional damper provides angular flexibility for the gearbox output shaft, thus enabling the sun pinion of the final gearbox stage to optimally align with the planetary gears, thus avoiding the need for a spline coupling that would otherwise be required for correct angular alignment of the gearbox output shaft. In this embodiment, the torsional damper also absorbs axial load transferred by the gearbox output shaft, thus avoiding the need for a separate axial load bearing.

In any drivetrain configuration in which the gearbox comprises helical gears in the final stage, and in which a torsional damper is connected to the gearbox output shaft, axial vibrations of the gearbox output shaft are effectively damped by the torsional damper and prevented from being passed to the bearing cartridge.

Alternatively or in addition, a torsional damper may be arranged between the non-drive end of the gearbox output shaft and the bearing. In such a configuration, the torsional damper can be connected to the upwind end of the bearing, or - if a longer gearbox output shaft is desired - to the downwind end of the bearing. In a configuration in which a torsional damper is connected to the downwind end of the bearing, the bearing may be arranged within the annular sleeve or about the annular sleeve. In each case, as explained above, neither axial nor radial vibrations are passed between the rotary components on either side of a torsional damper during operation of the wind turbine. However, the torsional damper does not affect the transfer of axial and radial forces to the bearing, and therefore does not detract from its function. For example, in the case of helical gears in the final stage of the gearbox that exert axial forces on the gearbox output shaft, such axial forces are transmitted by the torsional damper to the bearing cartridge. Such a configuration may be preferable in a drivetrain that deploys an elongated gearbox output shaft, since the torsional damper conveys additional elasticity to the output shaft and improves vibrational behaviour.

In a further preferred embodiment of the invention, a torsional damper comprises an annular seal arranged to prevent contaminants from entering the generator. For example, an annular seal can be arranged about the inner circumference of the damper (i.e. about its central opening), so that contaminants such as lubrication oil from the gearbox an/or spline connection and/or bearing can be prevented from passing entering the interior of the generator. Alternatively or in addition, a torsional damper in place about the downwind end of a cable conduit can be equipped with a support bearing about its annular aperture, in order to support the cable conduit.

Alternatively or in addition, a torsional damper may be arranged between the gearbox/generator bearing and the gearbox output shaft. For example, the bearing may be arranged within the annular sleeve, and the torsional damper is connected between the downwind ends of the gearbox output shaft and the bearing. Alternatively, the bearing may be arranged about the annular sleeve, and the torsional damper is connected between the downwind ends of the gearbox output shaft and the bearing. Again, in any variant of this configuration, axial and/or radial vibrations in the gearbox output shaft section are damped by the torsional damper and prevented from passing to the bearing (and vice versa). Such a configuration may be preferable if the damper mechanism functions optimally in a dry and oil-free environment.

In a further possible configuration, the gearbox/generator bearing may be arranged about the annular sleeve, and a torsional damper can be arranged between the bearing and the generator rotor. In such an embodiment, the torsional damper acts as a rotor support structure. The connection between the rotary bearing part and the torsional damper can be made so that the bearing cartridge is first removed in order to gain access to the damper, or in such way that the damper is first removed in order to gain access to the bearing cartridge. In any variant of this configuration, the inner diameter of the torsional damper is relatively large, to match an outer diameter of the bearing cartridge. In such a configuration, the torsional damper is preferably configured so that its damping element(s) provide electrical isolation between the generator rotor and bearing, thus preventing stray currents from passing to the gearbox/generator bearing. Again, axial and radial vibrations in the gearbox output shaft section are allowed to pass to the bearing, but are prevented from passing to the generator rotor. Equally, vibrations originating in the generator are allowed to pass to the bearing, but are prevented from passing to the gearbox. Such a configuration may be preferable if the desired damping characteristics can be obtained by constructing the torsional damper with a larger diameter.

Depending on the chosen configuration, access to a torsional damper may be very straightforward, or may entail the removal of one or more generator components. For example, if a torsional damper is connected at the downwind end of the bearing, it can be essentially directly accessible, and can be removed after unscrewing the inner and outer sets of fasteners. Alternatively, the maintenance method can involve a step of removing the bearing in order to obtain access to the torsional damper. In a configuration in which a torsional damper is arranged between the upwind end of the bearing and the generator rotor, the maintenance method can involve a step of removing a rotor support sleeve to obtain access to the torsional damper. In a configuration in which a torsional damper is arranged between two sections of the generator output shaft, the maintenance method can involve a step of removing a rotor support sleeve, the bearing cartridge and the second output shaft section to obtain access to the torsional damper. However, regardless of the chosen configuration, a torsional damper can be accessed without having to detach the generator from the gearbox. In the event that the generator rotor is to be disconnected from the bearing, the generator rotor may be locked in place, e.g. using a suitable arrangement of fasteners, in preparation for the maintenance procedure.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figures 1 - 6 show various embodiments of the inventive drivetrain assembly;
Figures 7 - 13 show embodiments of exemplary torsional dampers for use in the inventive drivetrain;
Figure 14 shows a torsional damper used in a prior art drivetrain.

In the diagrams, like numbers refer to like objects throughout. Objects in the diagrams are not necessarily drawn to scale.

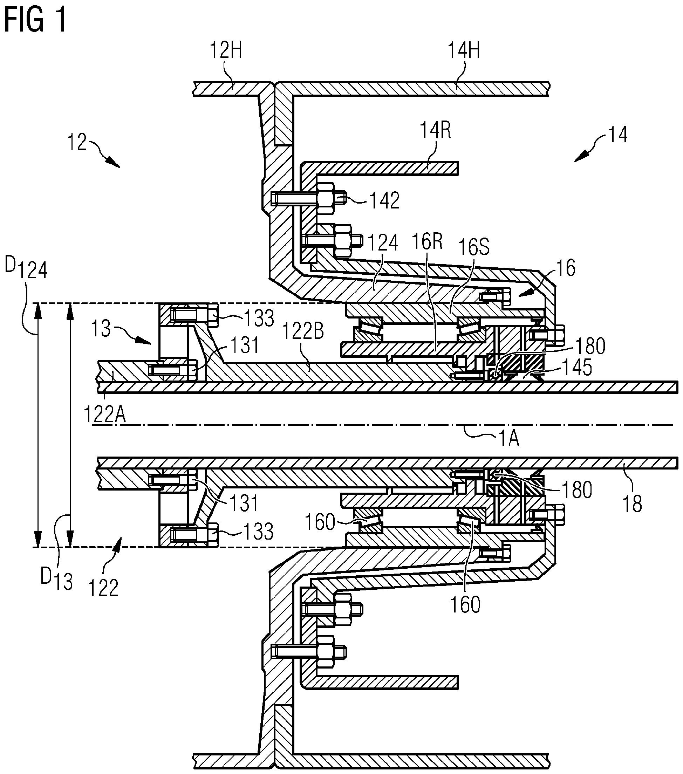

Figures 1 - 6 show various embodiments of the inventive drivetrain assembly 1 which, as explained above, is intended for installation in the nacelle of a wind turbine. Each diagram shows a final stage of the planetary gearset 12 and the generator 14, since these are relevant to the invention. It is assumed that the low-speed main shaft of a wind turbine drives the planet carrier in the first stage of the gearbox 14. The gearbox output shaft is connected to or integral with the sun gear of the final stage of the gearbox.

With the cantilever drivetrain configuration described above, the generator housing 12H is secured to the gearbox housing 14H, so that the generator does not rest on a bedplate but is instead supported entirely by the gearbox 12. In the embodiments shown here, the gearbox housing 12H comprises an annular sleeve 124 extending axially in the downwind direction, into the generator 14. In other embodiments, an annular sleeve can be mounted to the gearbox housing 12H. In some embodiments, the gearbox output shaft 122 can extend some distance into this annular sleeve 124. The annular sleeve 124 can be shaped to enclose the bearing cartridge 16, or to be enclosed by the bearing cartridge 16. The bearing cartridge 16 comprises one or more roller bearings 160 (two are shown here) between a stationary bearing part 16S and a rotating bearing part 16R. The generator rotor 14R is connected to the bearing 16 by means of an annular support structure 144.

In each of the diagrams given in Figures 1 - 6, a single torsional damper 13 is shown at a specific location. However, it shall be understood that the various embodiments may be combined as desired so that the drivetrain can deploy two or more torsional dampers 13, for example multiple dampers 13 at a specific location, and/or multiple torsional dampers 13 at different locations.

In each case, a torsional damper 13 is mounted between two rotary drivetrain parts by means of an inner annular arrangement of fasteners 131 and an outer annular arrangement of fasteners 133, all of which are axially arranged and accessible from the interior of the generator 14 as shown in each diagram, i.e. it is not necessary to detach the generator 14 from the gearbox 12 in order to access the torsional damper 13. In preparation for a maintenance procedure, the generator rotor 14R is fixed by a locking means 142 as indicated in each diagram.

The specifics of each of the various possible embodiments are described in the following:
In Figure 1, the gearbox output shaft 122 is a two-piece construction, and the torsional damper 13 is mounted between two output shaft sections 122A, 122B using the annular arrangements of fasteners 131, 133. The torsional damper 13 therefore rotates as one with the gearbox output shaft 122. Here, the annular sleeve 124 encloses the bearing cartridge 16. The largest diameter D₁₃ of the torsional damper 13 is chosen to not exceed the inner diameter D₁₂₄ of the annular sleeve 124, so that the torsional damper 13 can be accessed through the annular sleeve 124 after removal of the bearing cartridge 16.

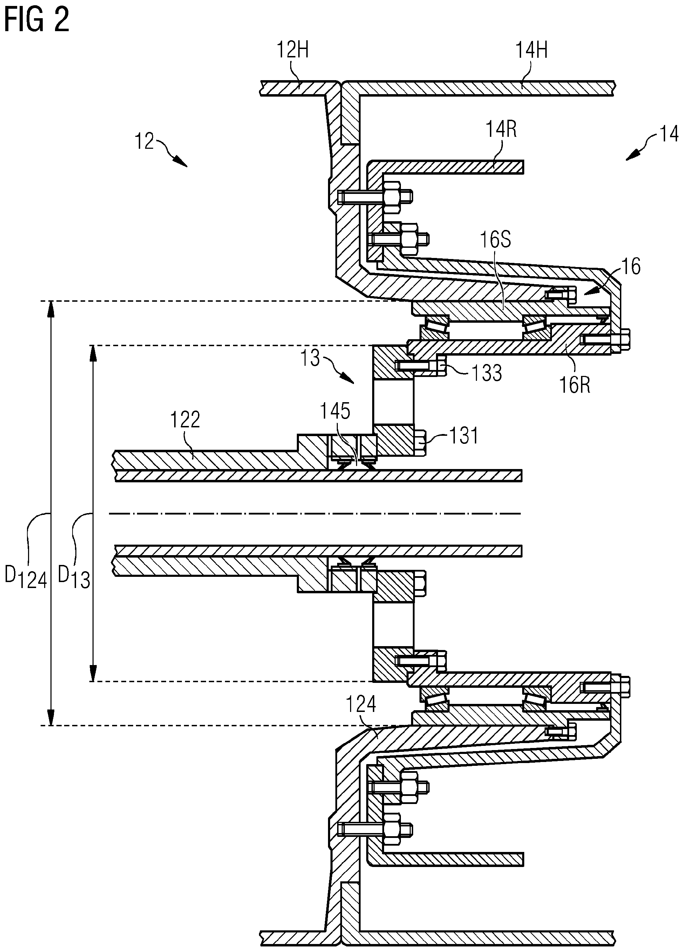

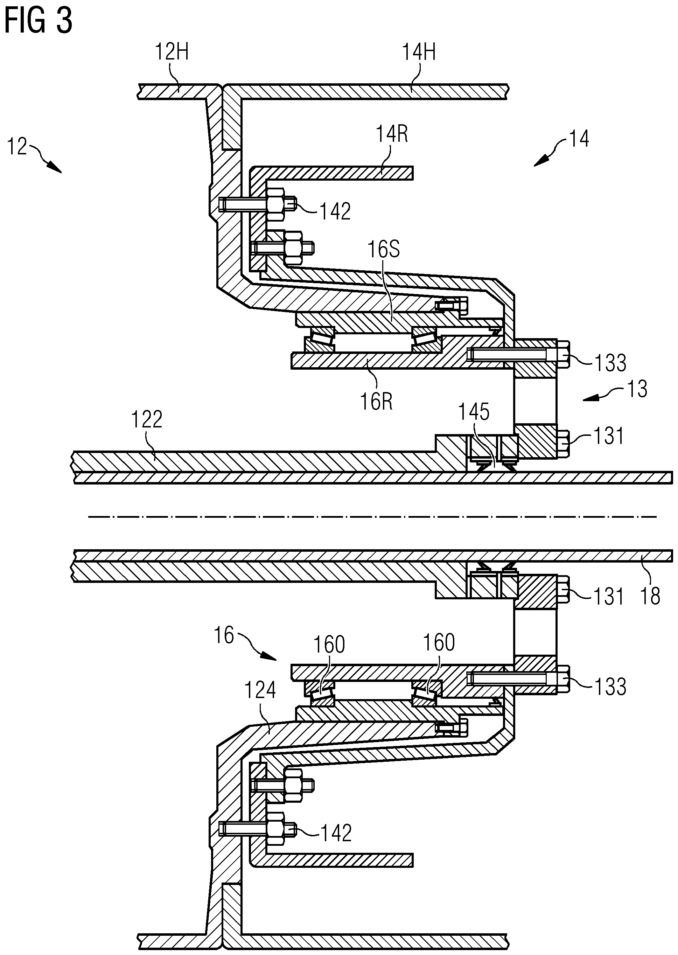

In Figure 2 and Figure 3, the torsional damper 13 is mounted between the gearbox output shaft 122 and the rotating bearing part 16R. In Figure 2, the torsional damper's outer fasteners 133 attach it to the upwind end of the rotating bearing part 16R. In Figure 3, the torsional damper's outer fasteners 133 attach it to the downwind end of the rotating bearing part 16R.

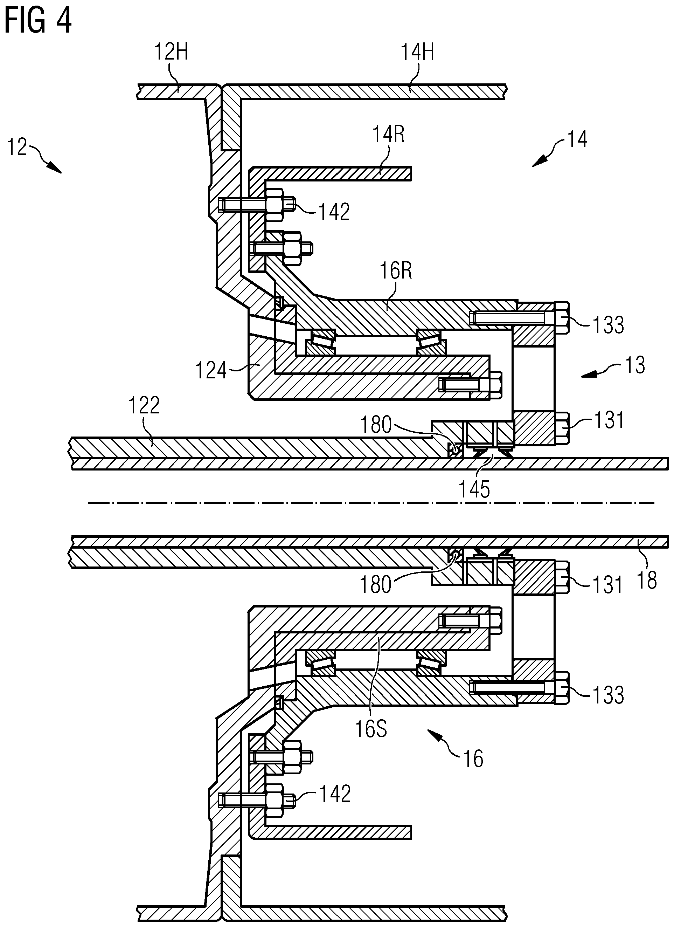

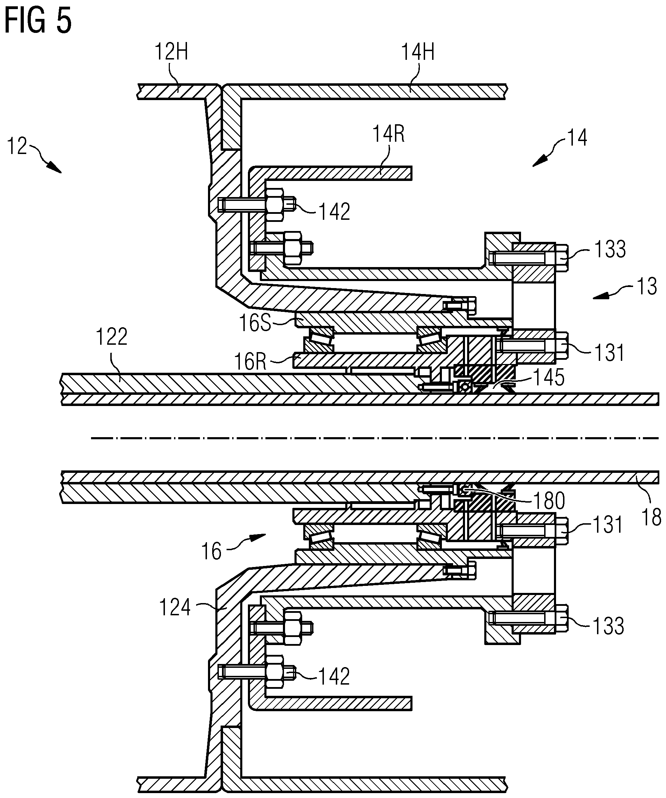

In Figure 4 and Figure 5, the torsional damper 13 is mounted within the generator 14, "in front of" the gearbox housing sleeve 124. In Figure 4, the bearing cartridge is mounted about the sleeve 124, and the torsional damper's outer fasteners 133 attach it to the rotating bearing part 16R. The torsional damper's inner fasteners 131 attach it to the gearbox output shaft 122. In Figure 5, the bearing cartridge is mounted within the sleeve 124, and the torsional damper's inner fasteners 131 attach it to the rotating bearing part 16R. The torsional damper's outer fasteners 133 attach it to the generator rotor 14R.

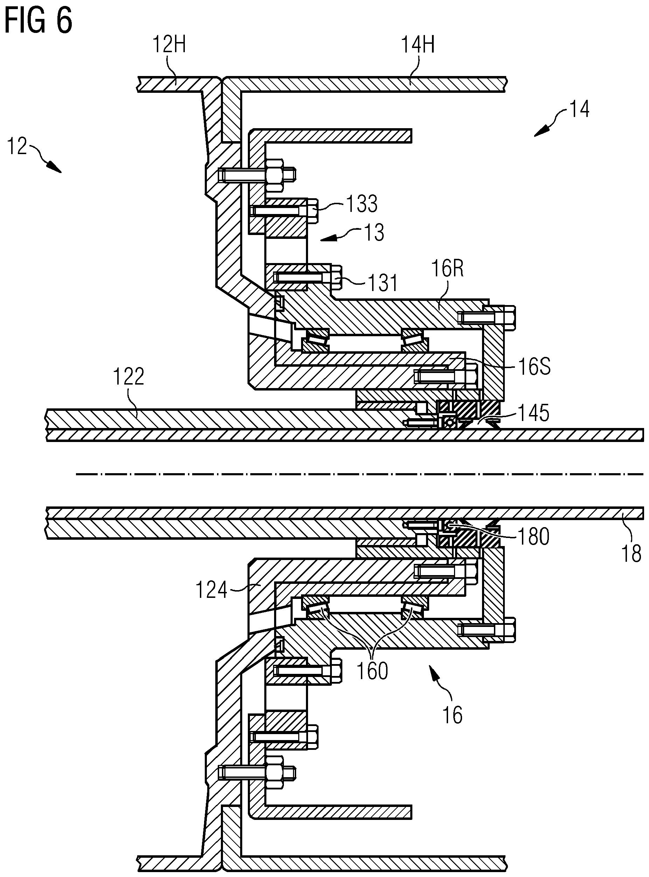

In Figure 6, the bearing cartridge 16 is mounted about the sleeve 124. Here, the torsional damper 13 is located between the bearing cartridge 16 and the rotor 14R. The torsional damper's inner fasteners 131 attach it to the rotating bearing part 16R, while its outer fasteners 133 attach it to the generator rotor 14R.

The diagrams also show a hollow tube 18 extending through the interior spaces of the drivetrain. This hollow tube can serve a cable conduit for electrical cables to the hub of the wind turbine, for example cables from a wind turbine controller to the pitch systems of the rotor blades. The diagrams also show various annular seals about the rotating and stationary parts, and lubrication oil passages, for reasons which will be known to the skilled person and which need not be explained here. An annular seal 145 as shown in the diagrams can be realised as part of a torsional damper 13, for example the seal 145 can extend about the annular opening in the damper 13. When the torsional damper 13 is detached for removal during a maintenance procedure, the seal 145 is removed along with the torsional damper 13. Equally, during assembly of the drivetrain, the seal 145 and damper 13 are handled as a single unit.

The diagrams also show a support bearing 180 arranged to support the cable conduit 18 at its downwind end. The support bearing 180 can be provided together with a torsional damper 13 arranged about the generator output shaft 122 as indicated in Figures 3 - 5. When the torsional damper 13 is detached for removal during a maintenance procedure, the bearing 180 is removed along with the torsional damper 13. Equally, during assembly of the drivetrain, the bearing 180 and damper 13 are handled as a single unit.

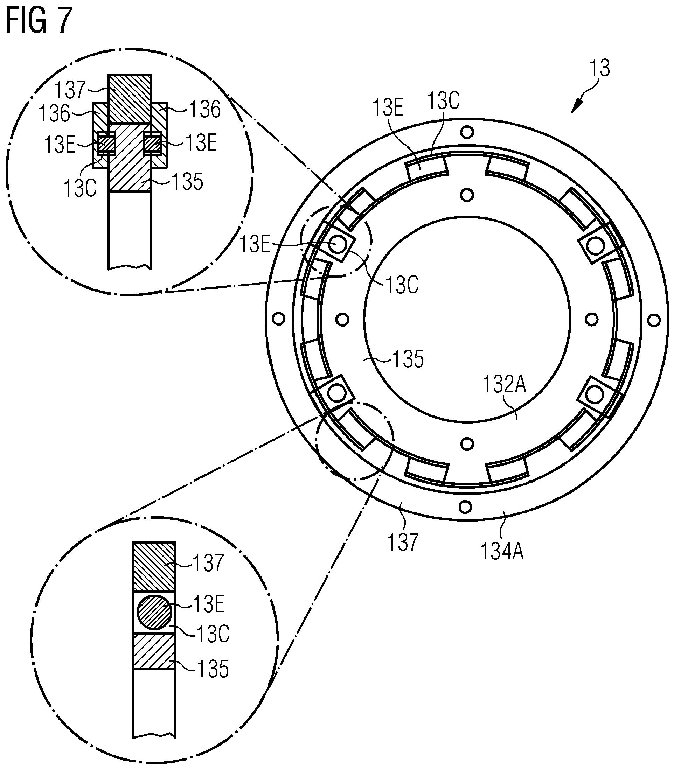

Figures 7 - 11 show exemplary embodiments of a torsional damper 13 that can be deployed in the embodiments described above. In any of the realisations described below, kinetic energy arising from structure-born vibrations is ultimately converted to heat as a result of damping material characteristic and/or fluid friction and/or friction between opposing faces of the various elements.

In the embodiments shown in Figures 7 - 11, the damper 13 can comprise several parts 135, 136, 137 that are shaped to form the cavities 13C when the parts are assembled.

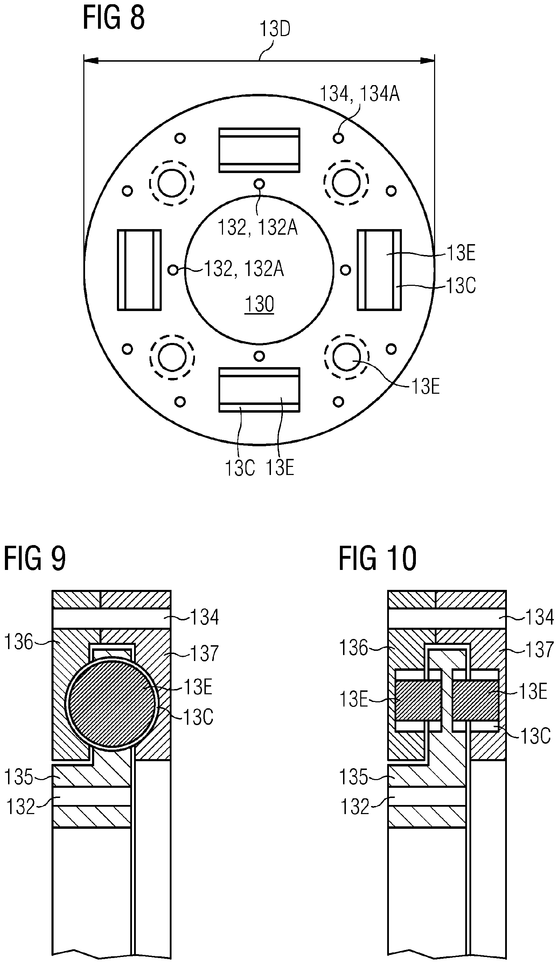

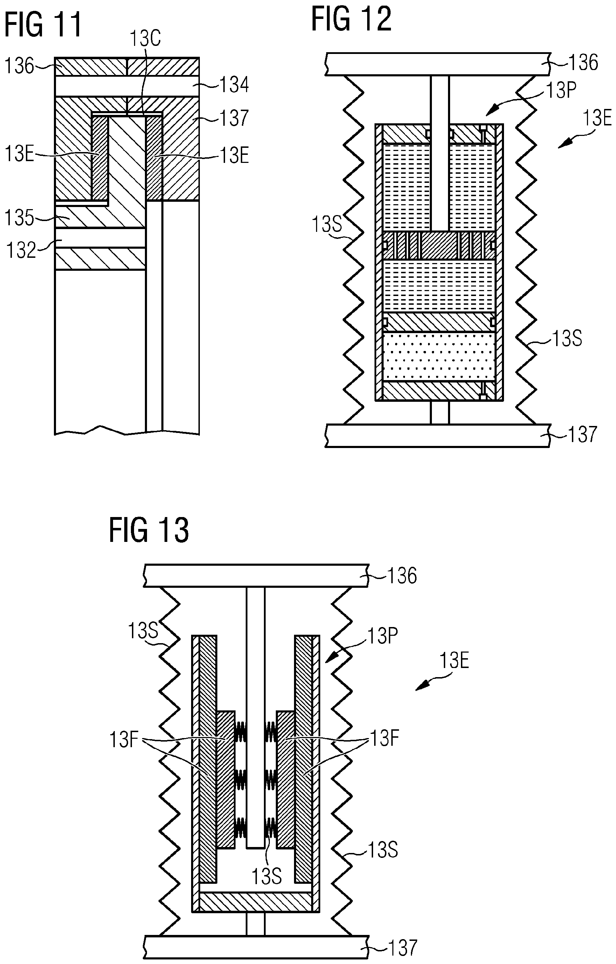

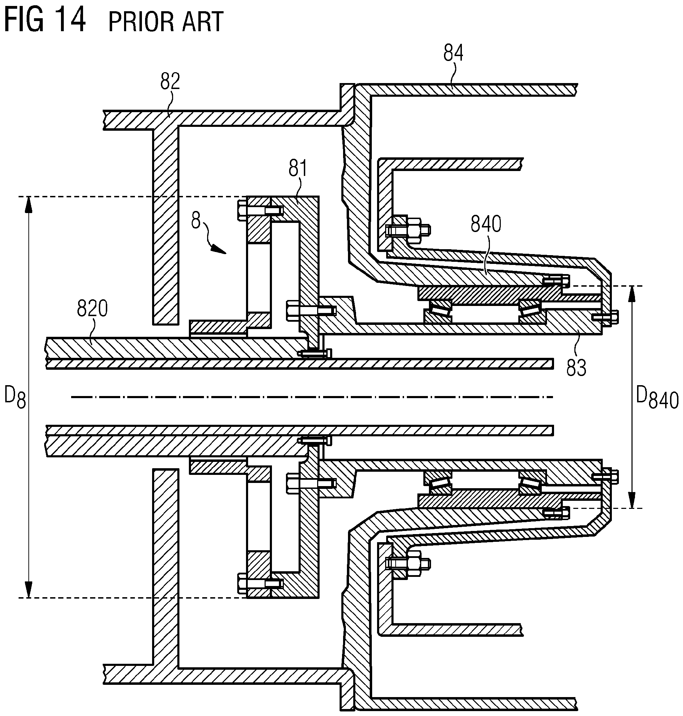

Figures 7 and 8 show plan views of two embodiments, Figures 9 to 12 show radial cross-sectional views, and Figures 13 and 14 show details of possible damper element realisations.

As shown in Figure 7 and Figure 8, the damper 13 has a central aperture 130 with a diameter similar to that of the gearbox output shaft 122 (as shown in the embodiments of Figures 1 - 5), or with a diameter large enough to fit about the rotating bearing part 16R (as shown in the embodiment of Figure 6), as appropriate. The torsional damper 13 has an inner annular arrangement of threaded holes 132 to receive the inner fasteners 131, and an outer annular arrangement of threaded holes 134 to receive the outer fasteners 133. The damping effect of the torsional damper 13 is achieved by the annular arrangement of elastic bodies 13E arranged in cavities 13C. Each elastic body can be made of a material with some degree of elasticity. Material choice and dimensions are chosen to obtain the desired damping characteristics that will damp the axial and/or radial vibrations in the rotating part about which the torsional damper 13 is mounted. In Figure 7 and Figure 8, any damping element 13E can be preloaded by choosing its length to slightly exceed the length of its cavity 13C. Figure 7 also shows cross-sections to show how two different damper element orientations might be realised.

In Figure 9, a damping element 13E (indicated by the rectangular shape in Figure 8) is essentially cylindrical and has a circular cross-section. Such a damping element 13E can be preloaded by choosing its length to slightly exceed the length of its cavity 13C. In this embodiment, damping is largely the result of physical deformation of the elastic bodies 13E.

In Figure 10, two cylindrical damping elements 13E (indicated by the circular shape in Figure 8) are arranged in a pair of adjacent cavities 13C that extend axially through the damper 13. This embodiment allows specific damping characteristics for the axial loads that are to be transferred through the damper 13, that can be combined with the torsional damping characteristics.

The embodiment of Figure 11 can be an alternative to the embodiment of Figure 10. Here, the parts 135, 136, 137 of the damper 13 are shaped to receive a pair of annular damping elements 13E. Each annular damping element 13E has an inner diameter and an outer diameter to fit inside annular cavities formed by the shapes of the damper parts 135, 136, 137.

Figure 12 and Figure 13 show further possible embodiments of damper elements 13E that could be used as alternatives to the realisations shown in Figures 7 - 11. Here, various combinations of piston structures 13P, springs 13S and friction elements 13F are combined to achieve the desired damping characteristics. In the embodiment of Figure 12, a piston assembly 13P is realised as a sealed cylinder with liquid-filled chambers on either side of a piston head mounted to the end of a piston rod. Ducts through the piston head allow a non-compressible liquid such as oil to pass between the chambers on either side of the plate. A compressible fluid such as a gas is contained in a lower chamber. A circular plate - free to move up or down - seals this lower chamber from the liquid-filled chambers. In the alternative realisation shown in Figure 13, a piston assembly 13P is realised as an open cylinder, lined with a friction material 13F. A further cylindrical body of friction material 13F is mounted using springs 13S to the piston rod. In this case, the damping characteristics are determined to a large extent by friction between the opposing faces as the piston rod moves during operation of the drivetrain. The damper element described in these two drawings is contained between opposing body parts 136, 137 of the torsional damper. During operation of the drivetrain, axial and/or radial vibrations originating in the gearbox (and transmitted to the torsional damper via the gearbox output shaft) result in deflections of the opposing faces 136, 137 of the damper, causing the piston rod to move within its cylinder.

Figure 14 shows a prior art approach to suppressing structure-borne vibrations in a cantilever drivetrain configuration. Here, a torsional vibration damper 8 is arranged between the gearbox 82 and the generator 84, and is mounted about the sun shaft 820 of the gearbox final stage. An annular rotary plate 81 connects the damper 8 (and output shaft 820) to a rotating carrier 83 of a bearing assembly arranged inside a sleeve 840 of the generator 82. A significant drawback is that the damper 8, with a diameter D₈ larger than the sleeve diameter D₈₄₀, is not readily accessible for maintenance. Should a repair or replacement procedure be necessary at some point during the service life of the wind turbine, the generator 84 and bearing assembly must be detached and the carrier 83 removed in order to access the torsional damper 8. Furthermore, this type of damper may require connection to an oil supply and drain, and therefore introduces a further level of complexity to the drivetrain.

Although the present invention has been disclosed in the form of preferred embodiments and variations thereon, it will be understood that numerous additional modifications and variations could be made thereto without departing from the scope of the invention, e.g. the damping element of a torsional damper can deploy any type of spring element with or without damping characteristics. Furthermore, a torsional damper can comprise any combination of the damping element realisations described above.

For the sake of clarity, it is to be understood that the use of "a" or "an" throughout this application does not exclude a plurality, and "comprising" does not exclude other steps or elements.

## Claims

1. A wind turbine drivetrain (1) comprising
- a planetary gearbox (12) for converting rotation of a low-speed shaft (10) to rotation of a high-speed gearbox output shaft (122);
- a generator (14) mounted about an annular sleeve (124) extending axially outward from a gearbox housing (12H) and enclosing the gearbox output shaft (122);
- a bearing assembly (16) arranged between the generator (14) and the gearbox (12), comprising a rotary bearing part (16R) and a stationary bearing part (16S); and
- a torsional vibration damper (13) arranged between two rotary components (122, 122A, 122B, 14R, 16R) of the drivetrain (1), which torsional vibration damper (13) comprises a number of damping elements (13E);
**characterized in that**
the torsional vibration damper (13) is dimensioned to facilitate access from within the generator (14).

2. A drivetrain according to any of the preceding claims, wherein the rotary components of the drivetrain (1) comprise the gearbox output shaft (10) and the rotary bearing part (16R), and wherein a torsional vibration damper (13) is arranged between the non-drive end of the gearbox output shaft (10) and the rotary bearing part (16R).

3. A drivetrain according to claim 2, wherein a torsional vibration damper (13) is connected to the upwind end of the rotary bearing part (16R).

4. A drivetrain according to claim 2, wherein a torsional vibration damper (13) is connected to the downwind end of the rotary bearing part (16R).

5. A drivetrain according to any of the preceding claims, wherein the rotary components of the drivetrain (1) comprise the rotary bearing part (16R)and the generator rotor (14R), and wherein a torsional vibration damper (13) is connected between the rotary bearing part (16R)and the generator rotor (14R).

6. A drivetrain according to any of the preceding claims, wherein the rotary components of the drivetrain (1) comprise a first part (122A) and a collinear second part (122B) of the gearbox output shaft (10), and wherein a torsional vibration damper (13) is arranged between the output shaft parts (122A, 122B).

7. A drivetrain according to any of the preceding claims, wherein the torsional vibration damper (13) comprises
- an inner annular arrangement (132A) of threaded axial bores (132) to receive fasteners (131) for connection to a first rotary component of the drivetrain (1);
- an outer annular arrangement (134A) of threaded axial bores (134) to receive fasteners (133) for connection to a second rotary component of the drivetrain (1); and
- a number of damping elements (13E) between the inner and outer annular bore arrangements (132A, 134A).

8. A drivetrain according to the preceding claim, wherein the torsional vibration damper (13) comprises a single annular damping element (13E) between the inner and outer annular bore arrangements (132A, 134A).

9. A drivetrain according to claim 7, wherein the torsional vibration damper (13) comprises a plurality of cavities (13C) between the inner and outer annular bore arrangements (132A, 134A), and a damping element (13E) arranged in each cavity (13C) .

10. A drivetrain according to any of the preceding claims, wherein a damping element (13E) comprises any of: an elastomer body (13R); a spring (13S); a friction element (13F); a piston assembly (13P).

11. A drivetrain according to any of the preceding claims, wherein a torsional damper (13) comprises an annular seal (145) arranged to prevent contaminants from entering the generator (14) and/or a bearing (180) arranged to support a cable conduit (18).

12. A method of performing a maintenance procedure on a wind turbine drivetrain (1) according to any of the preceding claims, which method comprises the steps of:
- removing a rear cover of the generator (14);
- detaching a number of generator components downwind of the torsional vibration damper (13) to obtain access to the torsional vibration damper (13);
- releasing fasteners (131, 133) of the torsional vibration damper (13); and
- removing the torsional vibration damper (13) through the open rear of the generator (14).

13. A method according to the preceding claim, comprising a step of removing the bearing assembly (16) to obtain access to a torsional vibration damper (13).

14. A method according to any of the preceding method claims, comprising a step of removing a rotor support sleeve (144) to obtain access to a torsional vibration damper (13).

15. A method according to any of the preceding method claims, comprising a step of removing a generator output shaft section (122B) to obtain access to a torsional vibration damper (13).
